# EUROPÄISCHE PATENTSCHRIFT

(11) **EP 0 767 924 B1**
(45) Veröffentlichungstag und Bekanntmachung des Hinweises auf die Patenterteilung: **13.01.1999**
(21) Anmeldenummer: 95923110.1
(22) Anmeldetag: 28.06.1995
(51) Int. Cl.: G02B 6/43, G06E 3/00

(54) **HOLOGRAFISCHER NEUROCHIP**
HOLOGRAPHIC NEUROCHIP
NEUROPUCE HOLOGRAPHIQUE

(30) Priorität: 28.06.1994 AT 1273/94; 27.06.1995 AT 1100/95
(43) Veröffentlichungstag der Anmeldung: 16.04.1997
(73) Patentinhaber: Budil, Matthias, 1190 Wien (AT)
(72) Erfinder: Budil, Matthias, 1190 Wien (AT)
(74) Vertreter: Holzer, Walter, Dipl.-Ing.
(86) Internationale Anmeldenummer: AT9500136
(87) Internationale Veröffentlichungsnummer: WO9600913

(56) Entgegenhaltungen:
- WO-A-87/06411
- US-A- 4 705 344
- US-A- 5 061 027
- US-A- 5 093 802
- US-A- 5 101 460
- US-A- 5 170 269

## Beschreibung

Die Erfindung bezieht sich auf eine optoelektronische integrierte Schaltung mit einer Substratfläche, die ein Lichtmuster erzeugt, wobei Lichtstrahlen von einigen ihrer optisch aktiven Bauelemente ausgehen, Lichtstrahlen durch einige ihrer optisch aktiven Bauelemente hindurchgehen und/oder Lichtstrahlen von einigen ihrer optisch aktiven Bauelemente reflektiert werden um so das Lichtmuster zu erzeugen, und mit einem reflektierenden Hologramm, wobei der Begriff "Hologramm" Lichtbeugungsstrukturen einschließt, wie beispielsweise reflektierende binäre oder multilevel Phasengitter, mehrschichtige Hologramme, dicke Hologramme oder Volumenhologramme, die auf sie einfallende Wellenfronten so durch lokale Änderung der Amplitude, der Phase, der Polarisation und/oder Kombination aus diesen beugen, daß Abbildungen von Lichtpunkten durch sie alleine, mit zusätzlichen Linsen und/oder zusätzlichen Spiegeln entstehen, wobei das von den Bauelementen erzeugte Lichtmuster oder Teile davon vom Hologramm auf die Substratfläche zurückreflektiert wird.

Bekannt sind bisher optoelektronische Schaltungen, die eine vorgegebene Anordnung von Lichtquellen und Detektoren optisch miteinander vernetzen, indem eine Vielzahl von Hologrammen oder ein einzelnes Hologramm verwendet wird, wobei jedoch nicht eine optimale Anordnung der Lichtquellen und Detektoren zueinander berücksichtigt wird. Dieses Verfahren scheitert, wenn Lichtquellen und Detektoren integriert ausgeführt werden und damit deren Größe und Abstände einige Wellenlänge des verwendeten Lichtes beträgt. In WO 87 06411 müssen Verbindungen durch äußerst aufwendige Wellenleiter hergestellt werden. In US 4 705 344 werden die Verbindungen durch ein Array von Hologrammen erzeugt. Dieses Verfahren ermöglicht nur kleine Aperturen, wodurch bei großer Verbindungsanzahl die Beugung Übersprechen bewirken würde. Zudem müssen die Lichtstrahlen zweimal umgelenkt werden, einmal auf das entsprechende Hologrammelement und ein zweites mal auf den entsprechenden Detektor, wodurch das Übersprechen noch verstärkt wird. In US 5 170 269 werden die Lichtstrahlen sogar 4 mal oder öfter mit ähnlich kleinen Aperturen abgelenkt. Besonders kritisch ist bei allen drei Patenten die Modulation der Lichtintensitäten mit Interferenz. Dadurch müssen kohärnte Lichtquellen verwendet werden und die gesamte Anordnung wird extrem temperaturabhängig und mechanisch aufwendig. Bei der vorliegenden Anordnung werden nur Lichtstrahlen gesammelt und in den jeweiligen Detektor gelenkt, wobei es bei kohärentem Licht Bereiche innerhalb der Detektorfläche geben kann die destruktive bzw. konstruktive Interferenz erfahren. Dadurch kann sich die Intensität örtlich zwar ändern, die Gesamtsumme ist jedoch nach dem Energieerhaltungssatz immer konstant und gleich der Summe der eingestrahlten Teilintensitäten. Zusätzlich fallen die Lichtstrahlen aller Lichtquellen auf ein einziges Hologramm und werden dadurch mit einem Lichtkegel mit großem Winkel von den Lichtquellen abgestrahlt bzw. von den Detektoren empfangen. Dadurch ist die Apertur dieser optischen Einrichtung besonders groß und es kann eine hohe Auflösung erreicht werden.

Aufgabe der vorliegenden Erfindung ist es, eine optimale Anordnung der Lichtquellen und Detektoren auf einem Substrat vorzugeben, damit diese optoelektronischen Schaltungen, die mit Hologrammen optisch vernetzt werden, möglichst hoch integriert werden können.

Die Erfindung löst diese Aufgabe dadurch, daß dieses Lichtmuster oder Teile davon vom Hologramm in erster oder höheren Ordnungen gebeugt werden, wobei das Lichtmuster durch das Hologramm oder durch eine zusätzliche Linse punktgespiegelt mit durch das Hologramm bestimmten Intensitäten mehrfach auf die Substratfläche abgebildet werden, und daß die zurückreflektierten, punktgespiegelten Lichtmuster teilweise oder ganz auf optisch aktive Bauelemente, wie beispielsweise Lichtdetektoren und/oder Lichtmodulatoren, fallen, um so eine logische Verknüpfung von Lichtintensitäten, die von einem oder mehren Punkten des Musters ausgehen, durchführen zu können.

Die Erfindung kann außerdem auf einem Substrat realisiert werden, wobei sich auf dem Substrat Laser- oder Leuchtdioden befinden, die Licht nach oben oder nach unten durch das Substrat abstrahlen. Zusätzlich können sich am Substrat integrierte elektrooptische Modulatoren, befinden, die durch Hologramme oder Linsen fokusiertes Laserlicht modulieren. Die vom Substrat nach oben oder nach unten ausgehende Lichtverteilung wird durch optische Linsen und Hologramme oder nur durch Hologramme mehrmals punktgespiegelt und gegeneinander verschoben auf die Substratoberfläche von oben oder von unten durch das Substrat mit gewünschter Intensität abgebildet. Weiters befinden sich an bestimmten Stellen auf dem Substrat Detektoren, die das von oben oder von unten durch das Substrat einfallende Licht empfangen, wobei das Licht auch mehrmals durch Bauelemente moduliert werden kann und dabei mehrmals durch Hologramme reflektiert wird. Zusätzliche Funktionen können außerdem elektronische Schaltungen ausführen, die sich am Substrat befinden.
Besonders kompakte Varianten der Erfindung erhält man, wenn sich die bildgebenden Hologramme und optischen Linsen auf der Substratoberfläche oder im Substrat befinden. Weitere Vernetzungen entstehen dadurch, daß sich die bildgebenden Hologramme und die optischen Linsen auf oder in lichtdurchlässigen Schichten, die auf der Vorder- oder Rückseite des Substrats angebracht sind, befinden. Unerwünschte Lichtstrahlen können durch Blenden beseitigt werden, die beispielsweise durch Ätzprozesse im Substrat oder auf den am Substrat befestigten Schichten erzeugt werden. Zusätzlich können mehrere solcher optoelektronischer Schaltungen in Sandwichbauweise verbunden werden, und Hologramme oder optische Linsen können Licht von einer zu einer anderen Schaltungsebene projizieren.

Optisch steuerbare Lichtquellen und Modulatoren können dadurch realisiert werden, daß sich SEED-(self electrooptic effect device)-Bauelemente auf dem Substrat befinden, die ihren Zustand wahlweise elektrisch oder durch einfallendes Licht ändern können.

Neuronale Netze können dadurch realisiert werden, daß eine regelmäßige Lichtverteilung wiederholt auf die Schaltung zurückreflektiert wird, sodaß in der Nähe jedes Lichtpunktes jeder andere Lichtpunkt abgebildet wird. Vektor-Matrix-Multiplizierer entstehen durch matrix-, zeilen- oder spaltenförmige Lichtverteilungen, die wiederholt in matrix-, zeilen- oder spaltenförmige Lichtdetektorgruppen zurückreflektiert werden.

Die Erfindung wird nachstehend an Hand von in den Zeichnungen dargestellten Ausführungsbeispielen näher erläutert.

In der Erfindung wird der Begriff Hologramm für alle Arten von Lichtbeugungsstrukturen verwendet, die auf sie einfallende Wellenfronten so ändern, daß Abbildungen von Lichtpunkten durch sie alleine, mit zusätzlichen Linsen und/oder zusätzlichen Spiegeln entstehen, wobei die Beugung durch lokale Änderung der Amplitude, der Phase, der Polarisation oder Kombination aus diesen erzeugt wird. Insbesondere seien Strichgitter, Filmhologramme, Phasengitter, Fresnellinsen, mehrschichtige Hologramme, dicke Hologramme bzw. Volumenhologramme erwähnt. Das Hologramm kann auch als Filter oder Polarisator ausgeführt sein, wobei es dann nur bei gewissen Wellenlängen oder Polarisationsrichtungen Abbildungen erzeugt. Weiters kann das Hologramm selbst als Spiegel wirken, wenn sich eine reflektierende Schicht auf seiner Oberfläche befindet. Außerdem sind Hologramme denkbar, die modulierend wirken, das heißt, daß die Intensität ihrer Abbildungen verändert werden kann. Eine Möglichkeit dafür sind elektrooptische Kristalle oder Flüssigkristalle, die ihre elektromagnetischen Eigenschaften in Abhängigkeit von elektrischen Feldern ändern. Mit Hilfe von Elektrodenstrukturen können Lichtbeugungsstrukturen erzeugt werden. Die Berechnung und Herstellung der oben erwähnten Hologramme zur Erzeugung von Abbildungen ist Stand der Technik. Werden keine Linsen verwendet, bestehen die abbildenden Strukturen aus Kreisen. Werden Linsen zur Abbildung verwendet, so sind die Strukturen aus Linien zusammengesetzt.

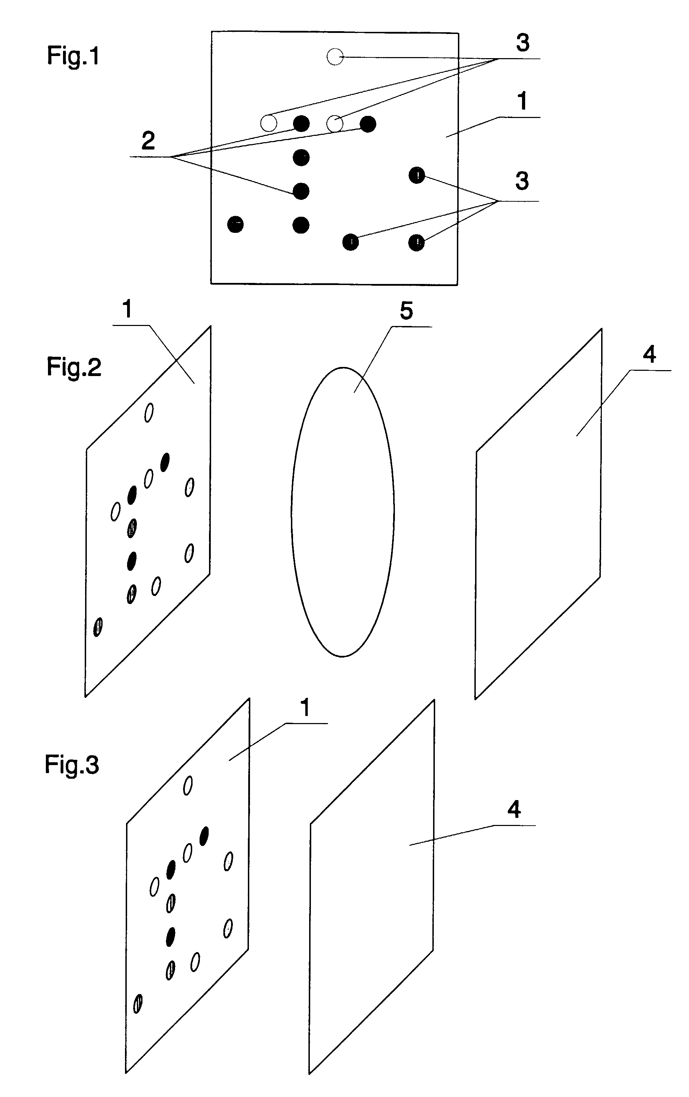

In Fig.1 ist ein Substrat (1) mit drei Lichtquellen (2) dargestellt, deren Licht durch ein Reflexionshologramm wieder auf das Substrat gelenkt wird, wobei punktgespiegelte Abbildungen (3) der Lichtquellen entstehen, die unterschiedliche Intensität haben können. Die Lichtquellen sind in Fig. 1 schwarz dargestellt und ihre Abbildung mit verschiedenen Grauwerten, um anzudeuten, daß verschiedene Intensitäten für jede Abbildung möglich sind. Die Lichtquellen selbst können auch verschiedene Intensität aufweisen. Dadurch entsteht in jedem Lichtfleck einer Abbildung eine Lichtintensität, die sich aus der Intensität der zugeordneten Lichtquelle und einem Multiplikationsfaktor, der durch das Hologramm bestimmt wird, zusammensetzt. Auch können sich Lichtflecke von verschiedenen Lichtquellen und verschiedenen Abbildungen überlagern, wodurch eine Addition der Abbildungsintensitäten entsteht. Durch diese Eigenschaft besteht die Möglichkeit, Licht in einem Detektor zu sammeln, dessen Gesamtintensität sich aus der Addition von gewichteten Lichtquellenintensitäten zusammensetzt. Mit Hilfe dieser Eigenschaft können Netze mit hohem Vernetzungsgrad aufgebaut werden, wie sie unter anderem bei neuronalen Netzen vorkommen. Die Gewichte der Netzkanten sind in diesem Beispiel positiv und werden durch das Hologramm fix vorgegeben. Außerdem kann jede beliebige logische Verknüpfung mit diesem Verfahren aufgebaut werden. Von n gleichen Lichtquellen werden n punktgespiegelte Abbildungen mit gleicher Intensität so erzeugt, daß in einem Lichtdetektor alle n Abbildungen der Lichtquellen projiziert werden. In diesem Detektor entsteht dadurch eine Lichtintensität, die proportional zu Summe der Lichtintensitäten der Lichtquellen ist, und wenn die Lichtquellen ein- und ausgeschaltet werden, wird eine binäre Größe dargestellt. Durch eine dem Detektor nachgeschaltete Schwellwertlogik kann, wenn die Schwelle so niedrig gewählt wird, daß bei nur einer eingeschalteten Lichtquelle eine Eins entsteht, ein logisches Oder oder, wenn die Schwelle so hoch gewählt wird, daß nur bei allen eingeschalteten Lichtquellen eine Eins entsteht, ein logisches Und realisiert werden. Mit Hilfe eines herkömmlichen elektronischen Inverters kann dann jede logische Verknüpfung realisiert werden.

In Fig.2 ist das Substrat (1) mit einem Hologramm (4) und einer Linse (5) dargestellt, wobei sich die Oberfläche des Substrates in der Brennebene der Linse befindet. Die Linse erzeugt eine räumliche Fouriertransformation der Lichtquellen des Substrates. Das Hologramm besteht in diesem Fall aus einer Überlagerung von Gitterlinien, die Wellenfronten erzeugen, die, wenn sie durch die Linse wiederum fouriertransformiert werden, den Abbildungen auf dem Substrat entsprechen. Das Hologramm kann auch direkt hinter der Linse angeordnet werden, damit Vignettierungseffekte möglichst gering sind.

In Fig.3 ist das Substrat (1) mit einem Hologramm (4) dargestellt, das die Abbildungen direkt ohne Linse erzeugt. In diesem Fall besteht das Hologramm aus einer Überlagerung von Beugungslinsen, die die Abbildungen am Substrat erzeugen, wobei die Beugungslinsen zueinander entsprechend verschoben sind.

Der Vorteil des wiederholten Abbildens der Lichtquellen liegt darin, daß Optiken mit hoher Apertur verwendet werden können. Dadurch sind die Abbildungsfehler, die durch Beugungseffekte entstehen, besonders klein, und es können integrierte Schaltungen als Substrat verwendet werden. Als Nachteil ist anzuführen, daß Lichtpunkte entstehen können, die nicht verwendet werden. Ein wesentlicher Faktor für die Qualität einer optischen Vernetzung ist das Raumbandbreiteprodukt, das sich aus dem Quadrat des Verhältnisses des Durchmessers der Abbildung zum Durchmesser der Lichtpunkte ergibt. Durch die hohe Apertur sind die Lichtpunkte besonders klein, und werden komplexe Linsensysteme, die weitere Abbildungsfehler, wie z.B. die Verzeichnung, korrigieren und auch asphärisch geschliffene Linsen enthalten können, verwendet, können Halbleiterchips mit 10mm Durchmesser und mehr vernetzt werden. Als Hologramme können auch binäre und multilevel Phasenhologramme eingesetzt werden. Bei normalen Hologrammen und binären Phasenhologrammen muß berücksichtigt werden, daß immer zwei Abbildungen entstehen. Weiter unten werden Beispiele angeführt, die diesen Effekt ausnützen.

Kommen Halbleiterlaserdioden als Lichtquellen zum Einsatz, muß bedacht werden, daß die abgestrahlte Wellenlänge variieren kann. Bei gewöhnlichen Hologrammen führt das zu einer Veränderung der Abbildung. Mit Hilfe von dicken, mehrschichtigen Hologrammen oder Volumenhologrammen kann erreicht werden, daß die Abbildung bei Änderung der Wellenlänge weitgehend konstant bleibt. Wird keine Linse verwendet, können Abbildungsfehler der Hologramme auch durch solche Maßnahmen korrigiert werden.

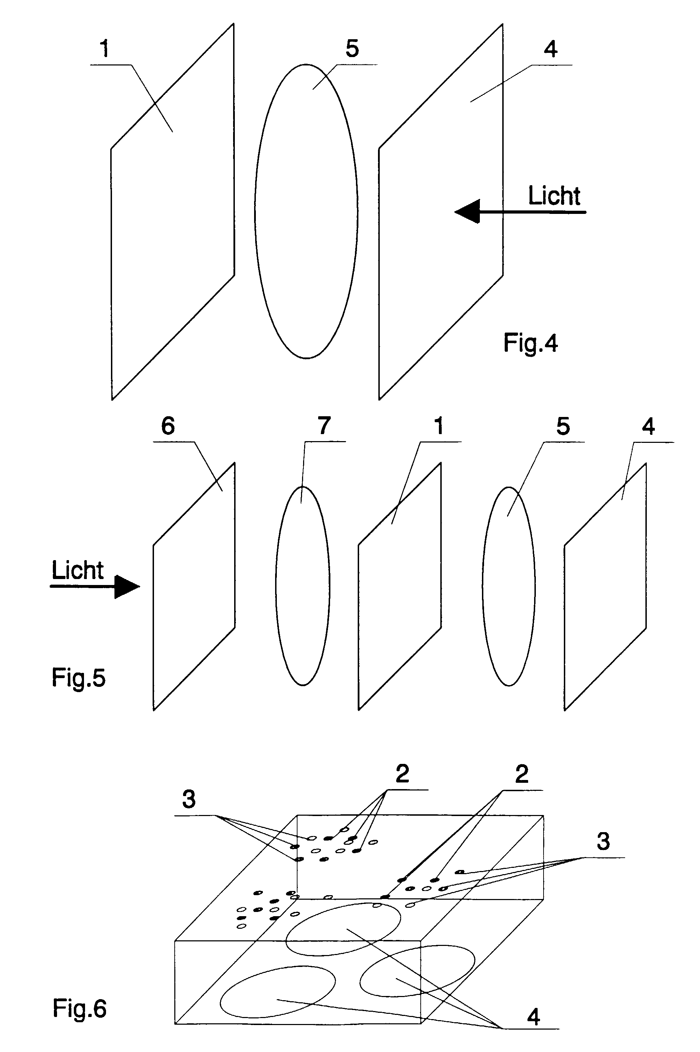

Bei monochromatischem parallelem Laserlicht können Hologramme dazu dienen, Lichtpunkte auf dem Substrat zu erzeugen. In Fig.4 ist eine Bauweise dargestellt, mit deren Hilfe paralleles Laserlicht durch ein Hologramm (4) und eine Linse (5) auf ein Substrat (1) fokusiert wird. An den Stellen, wo die Lichtpunkte sind, befinden sich optoelektronische Bauelemente, die ihre Reflexionseigenschaften ändern können, wie z.B. multiple quantum well Bauelemente. Dadurch wird Licht von diesen Stellen gesteuert zum Hologramm zurückreflektiert und von diesem wie bisher auf das Substrat zurückgespiegelt. Das Hologramm ist so ausgeführt, daß Teile davon in Transmission und andere Teile in Reflexion arbeiten. Die Bereiche, die das Licht durchlassen, erzeugen die Lichtpunkte am Substrat, die Bcreiche, die das Licht reflektieren, erzeugen die punktgespiegelten Abbildungen dieser Lichtpunkte.

In Fig.5 ist eine Variante dargestellt, bei der das Laserlicht von der Rückseite des Substrates (1) einfällt. Hinter dem Substrat befindet sich ein Hologramm (6) und eine Linse (7), die das Licht auf das Substrat fokusiert, wobei an diesen Stellen das Substrat lichtdurchlässig ist. Am Substrat befinden sich an den Stellen der Lichtpunkte optoelektronische Bauelemente, die ihre Transmissionseigenschaften ändern können, wie z.B. multiple quantum well Bauelemente. Dadurch entstehen gesteuerte Lichtquellen, deren Licht wie bisher optisch weiterverarbeitet werden kann. Die in Fig.4 und Fig.5 gezeigten Varianten können auch nur mit Hologrammen aus Beugungslinsen aufgebaut werden. Weiters besteht die Möglichkeit, das Licht, wenn es durch das vordere Hologramm zurückreflektiert wurde, wieder mit Transmissionsbauelementen zu modulieren und vom hinteren Hologramm, wie im Beispiel in Fig.4, auf das Substrat zurückzureflektieren. Die Detektoren müssen dann so gebaut sein, daß Licht von der Rückseite des Substrates empfangen werden kann. Das Laserlicht kann bei dieser Ausführung auch von vorne kommen, dann zweimal durch das Substrat verlaufen und vom vorderen Hologramm reflektiert werden. In diesem Falle werden herkömmliche Detektoren benötigt, die das Licht von vorne empfangen. Auch ist eine Variante denkbar, die vom Laserlicht von vorne und von hinten bestrahlt wird. Durch das zweimalige Modulieren des Lichtstrahles sind variable Gewichte in den Netzkanten möglich.

In Fig.6 ist ein Chip dargestellt, der die Bauweise in Fig.3 mehrmals in seinem Inneren realisiert hat. Auf seiner Oberfläche befinden sich Lichtquellen (2), die jedoch durch das Substrat nach unten strahlen. Auf der Rückseite des Chips befinden sich Hologramme (4), die wiederum punktgespiegelte Abbildungen (3) der Lichtquellen auf der Substratvorderseite erzeugen, wobei sich dort Detektoren befinden, die das Licht von unten empfangen können. Vorraussetzung für diese Bauweise ist, daß das Substrat für das verwendete Licht durchlässig ist. Durch diese Bauweise können logische Schaltungen realisiert werden, die auf dem Prinzip der Schwellwertlogik basieren, die auch bei neuronalen Netzen zum Einsatz kommen. Die Abbildungen werden sooft erzeugt, daß in einem Detektor alle Lichtpunkte entsprechend gewichtet einmal abgebildet werden. Sind negative Gewichte auch erforderlich, muß dieses Verfahren ein zweites Mal angewandt werden. Die Meßergebnisse der Detektoren werden durch elektronische Schaltungen weiterverarbeitet, wobei das negative Ergebnis vom positiven abgezogen wird und ein Komparator das Endergebnis liefert. Mit Hilfe der Schwellwertlogik lassen sich alle logische Operationen durchführen. Weiters können solche Schaltungen leicht mehrmals am Chip realisiert werden, da ein und dasselbe Hologramm für mehrere Logikelemente verwendet werden kann. Der Abstand der Rückseite von der Vorderseite des Chips bestimmt, wie groß das Hologramm ist. Ist nur ein kleiner Bildbereich gewünscht und möchte man die Fläche des Chips optimal ausnützen, muß der Abstand zwischen Vorder- und Rückseite verkürzt werden. Hier können z.B. Ätztechniken angewendet werden. Geätzte Stege zwischen den einzelnen Hologrammen können dazu dienen, Übersprechen zwischen den einzelnen Bereichen zu verhindern. Diese Stege können sowohl von der Vorderseite als auch von der Rückseite aus geätzt werden, wobei die von der Rückseite geätzten Stege den Vorteil besitzen, daß sie keine Fläche für die elektronischen Schaltungen auf der Vorderseite verbrauchen. Auch bei diesem holografischen Neurochip kann durch Hologramme fokusiertes Laserlicht und Bauelemente, die ihre Transmissionseigenschaften ändern können, verwendet werden, um steuerbare Lichtquellen zu erzeugen. In diesem Fall kommt das Laserlicht von vorne und wird auf die Transmissionsbauelemente fokussiert. Dann dringt es in das Substrat ein und kann eventuell durch Mikrobeugungslinsen aufgeweitet werden. Der weitere optische Strahlengang erfolgt so, als ob sich die Lichtquelle direkt am Chip befindet. Der Chip kann auch von der Rückseite bestrahlt werden, wobei die einzelnen Bereiche dann der Anordnung in Fig.4 entsprechen würden. Die Hologramme fokusieren das Licht von der Rückseite auf die Bauelemente, die sich auf der Vorderseite befinden. Diese Bauelemente können wiederum ihre Reflexionseigenschaft ändern und reflektieren das Licht gesteuert zurück auf die Hologramme. Außerdem können Bauelemente zum Einsatz kommen, welche das Licht moduliert durchlassen und dieses modulierte Licht wird in weiterer Folge durch ein Hologramm auf den Chip zurückreflektiert. Dort wird das Licht detektiert oder fällt wieder durch ein modulierendes Bauelement und wird von den Hologrammen auf der Rückseite des Chips auf die Oberfläche zurückreflektiert. Weiters besteht die Möglichkeit, daß das Licht wie in Fig.5 von hinten auf die Chipoberfläche fokusiert wird, dort wahlweise moduliert wird, von dem Hologramm auf der Vorderseite zurück auf den Chip reflektiert wird, dort wieder wahlweise durch ein Bauelement moduliert wird und von den Hologrammen auf der Chiprückseite auf die Vorderseite reflektiert wird. Durch das zweimalige Modulieren des Lichtes können Netze mit variablen Kanten aufgebaut werden. Außerdem kann eine transparente Schicht, die weitere Hologramme trägt, auf dem Chip befestigt sein. Der Chip kann auch elektronische Schaltungen auf der Rückseite und Hologramme auf der Vorderseite besitzen, und die Anordnung kann sandwichartig aufgebaut sein, wobei Hologramme Licht zwischen den einzelnen Schichten übertragen können.

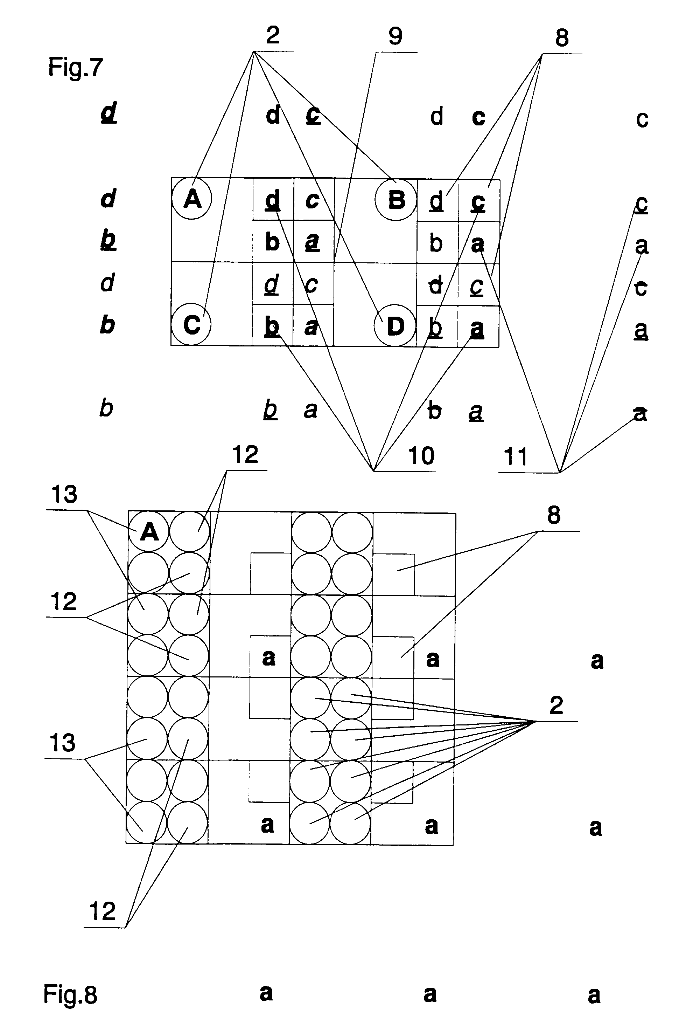

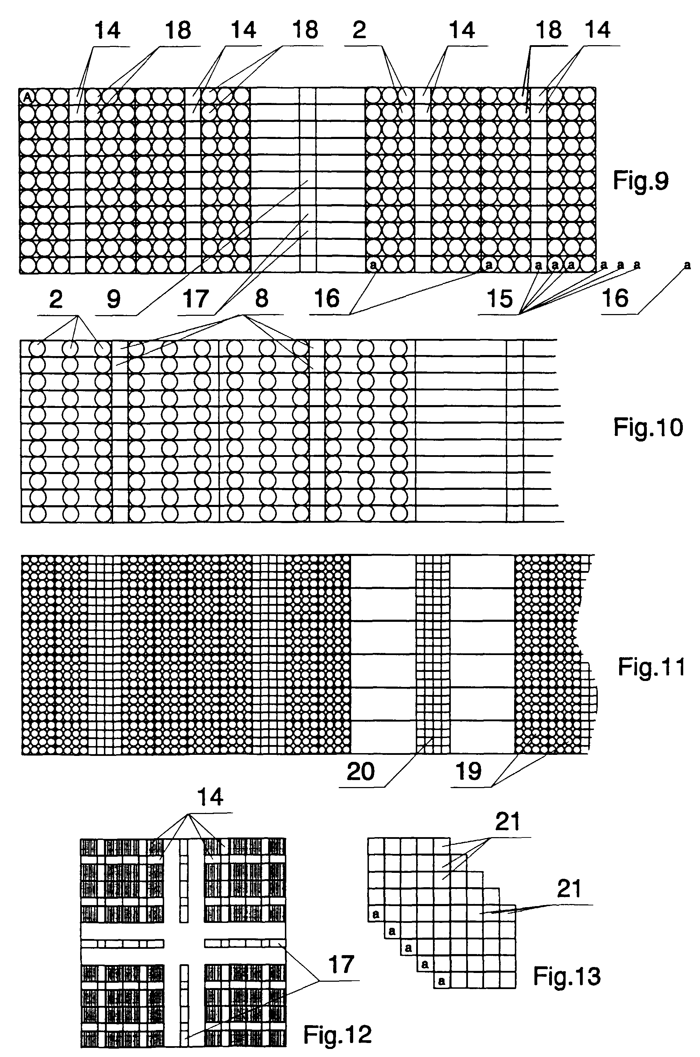

In Fig.7 ist ein Beispiel dargestellt, wie mit Hilfe der oben erläuterten Bauweise auf einem Substrat ein neuronales Netz aufgebaut werden kann. Die Lichtquellen (2) sind rund gezeichnet und die Detektoren (8) quadratisch. Jeder Lichtquelle ist ein Großbuchstabe zugeordnet und jeder zugehörigen Abbildung auf einem Detektor der entsprechende Kleinbuchstabe in verschiedenartiger Schrift. Die Schriftart ist für jede Abbildung aller Lichtquellen gleich. Die Lichtquellen werden in diesem Beispiel neunmal auf das Substrat punktgespiegelt abgebildet, wobei das Symmetriezentrum (9) genau in der Mitte des Substrats liegt. Diese Abbildung kann beispielsweise mit Hilfe eines binären Phasengitterhologrammes und einer Linse erzeugt werden. Die Abbildung nullter Ordnung (10) gibt es nur einmal und ist fett unterstrichen dargestellt. Alle anderen Abbildungen erster Ordnung (11) sind symmetrisch zur Abbildung nullter Ordnung. Bei einem binären Phasengitter entsteht immer eine zweite Abbildung erster Ordnung, die genauso weit von der Abbildung nullter Ordnung, nur in die andere Richtung, verschoben ist, wie die erste Abbildung erster Ordnung. Diese Eigenschaft ist in diesem Beispiel wünschenswert. Die einzelnen Lichtpunkte der Lichtquellen entstehen hier alle in der Nähe einer Lichtquelle. Dadurch wird gewährleistet, daß jeder Intensitätswert in die Nähe jeder Lichtquelle übertragen wird, womit ein voll vernetztes neuronales Netz aufgebaut werden kann. Die Gewichte werden in diesem Beispiel elektronisch ausgewertet, die sich daraus ergebenden Werte elektronisch addiert und das Ergebnis nichtlinear bewertet und an die jeweilige Lichtquelle weitergegeben. In diesem Beispiel erfolgt die Vernetzung rein optisch und die Berechnung wird analog und lokal durchgeführt. Es besteht die Möglichkeit, auch digitale Netze aufzubauen, wobei mehrere Lichtquellen und Detektoren zu Gruppen zusammen gefaßt sind, die eine digitale Zahl repräsentieren. In Fig.11 ist eine solche digitale Variante eines optischen Rechners dargestellt.

In Fig.8 ist eine ähnliche Variante wie in Fig.7 dargestellt, die jedoch die Addition optisch durchführt. Pro Zelle sind hier acht Lichtquellen (2) und zwei Detektoren (8) vorhanden, damit auch negative Gewichte berücksichtigt werden können. Die neunmalige Projektion der Lichtquellen ist durch die Abbildung der linken oberen Lichtquelle "A" an Stellen wo sich ein kleines a befindet, eindeutig festgelegt. Jede Zelle hat Lichtquellen, die einer anderen Zelle (12) oder derselben Zelle (13) zugeordnet sind, wobei die eine negative Werte und die andere positive Werte überträgt. Die Detektoren sind so versetzt angeordnet, daß sie das Licht für die zugeordnete Zelle und des zugehörigen Vorzeichens sammeln. Das Endergebnis wird durch elektronische Substraktion der beiden Detektoren erzeugt. Es besteht auch die Möglichkeit, beide Varianten aus Fig.7 und 8 zu kombinieren, sodaß sowohl Multiplikation als auch Addition optisch durchgeführt wird. Das Licht geht in diesem Fall von jeder Zelle aus, trifft wie in Fig.7 bei jeder Zelle ein, wobei sich statt den Detektoren dort optoelektronische Bauelemente befinden können, die ihre Retlexionseigenschaften ändern können, wird dort gesteuert reflektiert und fällt wieder wie in Fig.8 in einen Detektor. Vorzeichen müssen in diesem Fall auch durch mehrmalige Ausführung berücksichtigt werden.

In Fig.9 ist ein Vektoraddierer dargestellt, der Vektoren in zwei Schritten analog addiert. Die Vektoren werden an den Lichtquellen (2) angelegt, wobei jede Lichtquellenspalte einen Vektor darstellt. Die Addition der Vektoren erfolgt in zwei Schritten. Zuerst werden die Teilergebnisse in den dafür vorgesehenen Detektoren (14) gesammelt. Dazu sind die Abbildungen (15) der Lichtquellen dreimal gegenüber dem Symmetriezentrum (9), das der Mittelpunkt der Anordnung ist, um eine Zelle nach links und nach rechts verschoben. Diese Verschiebung wird durch die Abbildung der Lichtquelle "A" in Bereiche, die durch ein kleines "a" gekennzeichnet sind, angezeigt. Es sind noch weitere Abbildungen (16) vorhanden, die um 6 bzw. um 13 Zellen nach links und nach rechts verschoben sind. Diese Verschiebungen dienen dazu, die Teilergebnisse in den Detektoren des Gesamtergebnisses (17) zu sammeln. Beim ersten Schritt werden die zu den Detektoren der Teilergebnisse benachbarten inneren Lichtquellen (18) nicht benützt, da sonst ihre Intensitäten in unerwünschten Detektoren empfangen würden. Die Teilergebnisse entstehen dann in zum Mittelpunkt punktgespiegelter Weise in den Teilergebnisdetektoren (14). Diese Ergebnisse werden dann zu den inneren benachbarten Lichtquellenspalten (18) weitergegeben, und das Endergebnis entsteht dann in der mittleren Detektorenzeile, wobei wieder eine Punktspiegelung erfolgt, womit das Endergebnis wieder dieselbe Richtung wie die ursprünglichen Vektoren hat. Durch die zweimalige Addition wird auch gewährleistet, daß nicht zu viele Abbildungen notwendig sind, die dann entsprechend lichtschwach wären. In Fig.10 ist eine ähnliche Variante abgebildet, bei der verhindert wird, daß Licht wieder auf Lichtquellen (2) fällt, indem die Lichtquellen um zwei Zellen verschoben sind, das Licht aber um ungerade Zellenanzahl verschoben wird, damit es auf einen Detektor (8) fällt. Das kann von Vorteil sein, wenn reflektierende Bauelemente verwendet werden. Weiters wird das Übersprechen durch Beugungseffekte zwischen den Zellen verringert. In Fig. 11 ist eine digitale Variante des optischen Addierwerkes dargestellt. Die Zahlen werden in diesem Beispiel durch 4x4 große Lichtquellenfelder (19) repräsentiert. Es können dort 16 Bit lange Zahlen oder ein Teilergebnis einer Multiplikation von zwei 4 Bit langen Zahlen dargestellt werden. Die Teilergebnisse entstehen dadurch, daß jede Stelle der einen Zahl mit jeder anderen Stelle der anderen Zahl multipliziert wird. Im Mitteldetektorstreifen (20) entstehen dann Intensitätswerte, die durch Analog-Digitalwandler ausgewertet werden können und dann entsprechend ihres Stellenwertes zusammenaddiert werden müssen, um das Endergebnis zu erhalten. Mit diesem Verfahren können Vektormatrixmultiplizierer aufgebaut werden.

In Fig.12 ist ein optisches Rechenwerk dargestellt, mit dem auch die transponierte Matrix mit einem Vektor multipliziert werden kann. Das wird dadurch erreicht, daß die Abbildungen nicht nur nach links und nach rechts, sondern auch nach oben und nach unten verschoben werden. Sonst ist das Rechenwerk wie die oberen Beispiele ausgeführt. Es entstehen wieder punktgespiegelte Teilergebnisse in den dafür vorgesehen Detektoren (14), und die Endergebnisse werden in den mittleren Detektoren (17) gesammelt. Die Multiplikation der Vektorelemente mit den Matrixelementen, die bei jeder Zelle gespeichert sind, erfolgt lokal bei jeder Zelle und kann auch teilweise optisch (Fig. 13) erfolgen, wobei sich die Hologramme dafür auf der Rückseite des Substrates, wie in Fig.6 dargestellt, befinden können. Der Vorteil dieses Rechenwerkes liegt darin, daß es für Modelle der neuronalen Netze gut geeignet ist. Wird der Backpropagationalgorithmus angewendet, werden die Datenvektoren zB. senkrecht angelegt und die Differenzvektoren waagrecht. Die Vektoren können elektrisch durch Leitungen, die senkrecht und waagrecht verlaufen, zu den Zellen gebracht werden oder auch optisch mit ähnlichen Verfahren wie oben vorgestellt. In diesem Falle müssen entsprechende Detektoren bei jeder Zelle vorhanden sein. Gleichzeitig wird das äußere Produkt aus Datenvektoren und Differenzvektoren für die Änderung der Matrixelemente, entsprechend der Lernregel, benötigt, wobei das Ergebnis wieder eine Matrix ist, die lokal bei jeder Zelle ausgewertet und zum zugehörigen Matrixelement addiert werden kann. Bei mehrschichtigen Netzen können mehrere solcher Anordnungen kaskadiert werden.

In Fig.13 ist dargestellt, wie ein matrixförmiges Zwischenergebnis, das dadurch entsteht, daß jede Stelle der einen Zahl mit jeder anderen Stelle der anderen Zahl multipliziert wird, durch optische Methoden ausgewertet werden kann. Die Abbildung des matrixförmigen Zwischenergebnisses wird entsprechend oft der Stellenanzahl der Zahlen um eine Zelle diagonal versetzt überlagert. In Fig. 13 ist das dadurch angedeutet, daß die linke untere Ecke mit einem "a" gekennzeichnet ist. In der mittleren Zeile oder Spalte (21) entsteht dann das Gesamtergebnis, das durch Analog-Digitalwandler ausgewertet wird, und diese Zahlen werden dann elektronisch entsprechend ihrer Stelle addiert.

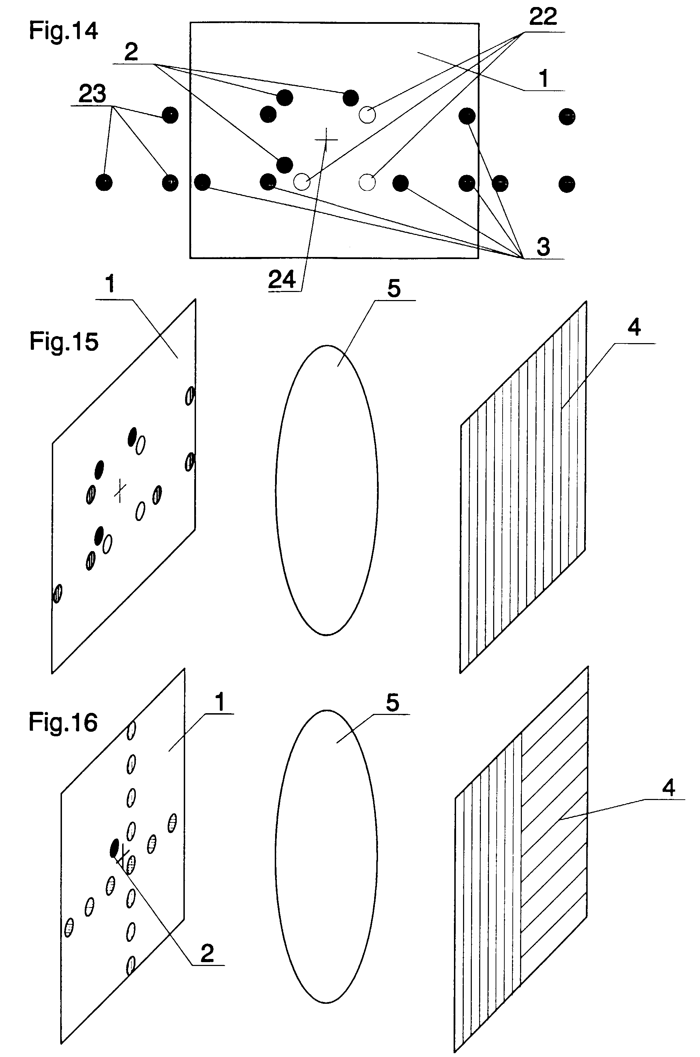

Im folgenden soll das Problem der unerwünschten Abbildungen gelöst werden. Durch den Einsatz von Hologrammen als bildgebende Elemente können Lichtstrahlen entstehen, die nicht zur Funktion der Schaltung beitragen. In Fig.14 ist ein Lichtmuster dargestellt, das zwei in entgegengesetzter Richtung um den gleichen Abstand zur direkten um die optische Achse (24) punktgespiegelten Projektion (22) versetzte Abbildungen (3) der Lichtquellen enthält. Die direkte punktgespiegelte Projektion (22) der Lichtquellen wird Abbildung nullter Ordnung, und die beiden anderen Projektionen werden Abbildungen erster Ordnung genannt. Zusätzlich sind Abbildungen höherer Ordnung (23) dargestellt, die um ganzzahlige Vielfache des Abstandes der Abbildungen erster Ordnung von jener nullter Ordnung versetzt sind. Sie sind jedoch in diesem Fall unerwünscht und werden nicht auf das Substrat (1), auf dem sich die Schaltung befindet, projiziert. Das dargestellte Lichtmuster entsteht, wenn ein Hologramm verwendet wird, das nur die Amplitude der durch eine Linse fouriertransformierten Lichtstrahlen dämpft, wie zum Beispiel ein Filmhologramm, oder das nur die Phase dieser Lichtstrahlen ändert, wie zum Beispiel ein binäres oder ein multilevel Phasengitter. Insbesondere entstehen bei Verwendung von Hologrammen die Abbildungen höherer Ordnung, wenn sie das Licht nur auf zwei verschiedene Arten modulieren können. Zum Beispiel wenn das Hologramm das Licht in Abhängigkeit vom Ort reflektiert oder nicht, oder wenn es die Phase in Abhängigkeit vom Ort um 0 Grad oder um 180 Grad dreht. Die erwähnten Hologramme müssen auf der Rückseite verspiegelt sein, oder es muß sich hinter ihnen ein Spiegel befinden, damit die Lichtstrahlen auf die Schaltung zurückreflektiert werden. Außerdem besteht die Möglichkeit, ein Hologramm durch einen Spiegel zu realisieren, dessen verspiegelte Oberfläche so geätzt wurde, daß ein Muster, zum Beispiel ein Strichgitter, entsteht, wobei die geätzten Bereiche die Lichtstrahlen nicht reflektieren.

In Fig.15 ist das in Fig.14 beschriebene Substrat (1), mit einem Hologramm (4) und einer Linse (5) dargestellt, wobei sich die Oberfläche des Substrates in der Brennebene der Linse befindet. Die Linse erzeugt eine räumliche Fouriertransformation der Lichtquellen des Substrates. Das Hologramm besteht in diesem Fall aus einem Liniengitter, das Wellenfronten erzeugt, die, wenn sie durch die Linse wiederum fouriertransformiert werden, den Abbildungen auf dem Substrat entsprechen. In diesem Beispiel werden die unerwünschten Abbildungen höherer Ordnung nicht auf die Schaltung projiziert. Ihre Lichtstrahlen können zusätzlich durch Blenden unterbrochen werden, damit sie nicht auf benachbarte Schaltungen fallen. Die Abbildung nullter Ordnung befindet sich in diesem Beispiel auf der Schaltung. Wenn die optische Achse (24) unsymmetrisch angeordnet wird, kann man auch die Abbildung nullter Ordnung von der Schaltung entfernen. Die unerwünschten Abbildungen können immer dadurch entfernt werden, indem die gewünschte Abbildung erster Ordnung um einen entsprechend großen Abstand versetzt wird. Das hat zur Folge, daß die anderen Abbildungen um entgegengesetzte, doppelte oder mehrfache Abstände versetzt sind und sich nicht mehr störend auswirken. Außerdem können Abbildungen höherer Ordnung mit Abbildungen erster Ordnung anderer Projektionen zusammenfallen und sich nicht störend auswirken, wenn ihre Intensität bei der Auslegung des Hologrammes berücksichtigt wird. Zusätzlich können unerwünschte Abbildungen durch Projektion von bereits projizierten Abbildungen entstehen, die man dadurch unterdrückt, indem man die Lichtdetektoren und andere Stellen, wo Lichtpunkte entstehen, lichtabsorbierend ausführt.

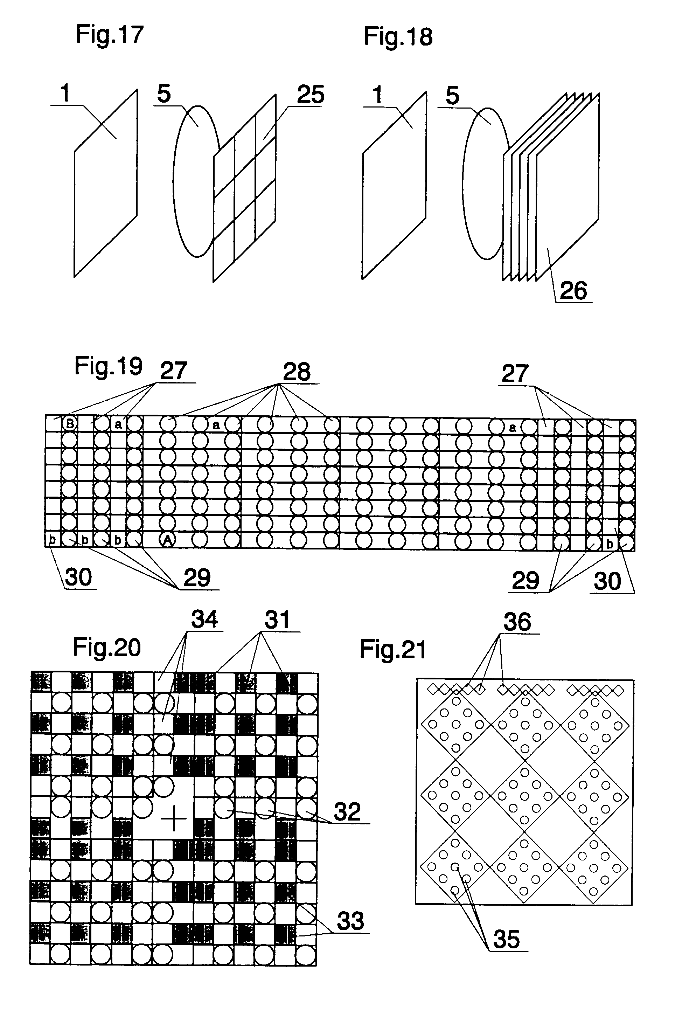

Eine andere Möglichkeit bieten Polarisatoren, die, wie in Fig.16 gezeigt, unerwünschte Lichtpunkte wegfiltern können. In Fig. 16 ist am Substrat eine Lichtquelle (2) vorhanden, deren Licht mit Hilfe eines Hologrammes (4), das aus zwei senkrecht zueinander stehenden Liniengittern besteht, mehrmals auf das Substrat (1) zurückreflektiert wird, wobei sich vor den Liniengittern zwei Polarisatoren befinden, deren Polarisationsrichtung auch senkrecht zueinander steht. Dadurch wird verhindert, daß Licht von Lichtpunkten, die das eine Liniengitter erzeugt hat, von dem anderen Liniengitter zurückreflektiert wird. In der Abbildung nullter Ordnung sind beide Polarisationsrichtungen vertreten. In den anderen Abbildungen nur die des dazugehörigen Polarisators. In Fig. 17 ist eine Variante dargestellt, die mehrere Teilhologramme (25) verwendet, wobei sich vor diesen Teilhologrammen Filter, Polarisatoren oder Modulatoren befinden können, damit Licht von Lichtquellen verschiedener Wellenlänge oder verschiedenen Polarisationsrichtungen unterschiedlich abgelenkt wird und damit Verbindungen mit Hilfe der Modulatoren ein- und ausgeschaltet oder verschieden gewichtet werden können. Diese Variante hat den Nachteil, daß die Apertur für jedes Teilhologramm entsprechend klein wird und damit die Integrationsdichte der Lichtquellen und Detektoren nicht so hoch sein kann, wie bei der Variante in Fig.15. Dieser Nachteil kann dadurch behoben werden, daß man, wie in Fig.18 zu sehen ist, die Hologramme (26) hintereinander anordnet. Die Hologramme müssen in diesem Fall selbst aus Filtermaterial oder polarisierendem Material bestehen, wobei diese Hologramme das Licht entweder vom Ort abhängig filtern oder ungehindert durchlassen oder vom Ort abhängig polarisieren oder ungehindert durchlassen. Außerdem müssen die Modulatoren auch als Hologramm wirken. Das kann man dadurch erreichen, daß der Analysator einer Pockelszelle als Hologramm ausgeführt wird, wobei dieser Analysator den durch den Polarisator polarisierten und durch den elektrooptischen Kristall in der Polarisationsrichtung modulierten Lichtstrahl vom Ort abhängig dämpft oder ungehindert durchläßt. Durch Anlegen einer Spannung an den elektrooptischen Kristall kann dann das Hologramm ein- und ausgeschaltet werden. Eine andere Möglichkeit, ein veränderbares Hologramm zu realisieren, besteht darin, daß auf einem elektrooptischen Kristall eine rechenartige Elektrodenstruktur aufgebracht und an dieser ein Spannungsmuster angelegt wird, um verschiedene Hologramme mit Hilfe des elektrooptischen Effektes zu erzeugen. Die Elektrodenstruktur selbst erzeugt natürlich auch ein Hologramm, jedoch kann die Ortsfrequenz der rechenartigen Struktur so hoch gewählt werden, daß ihre Abbildungen erster Ordnung nicht auf die Schaltung projiziert werden. Der Vorteil dieses Hologramm-Modulators liegt darin, daß mehrere solche hintereinander angeordnet werden können.

In Fig. 19 ist ein Vektoraddierer dargestellt, bei dem unerwünschte Abbildungen höherer Ordnungen nicht auf die Schaltung abgebildet werden. Er addiert die Vektoren in zwei Schritten ähnlich wie die Variante in Fig.9. Zuerst werden Teilergebnisse der beiden Hälften der Schaltung links und rechts vom Symmetriezentrum in den dafür vorgesehenen Detektoren (27) gesammelt. Dazu gibt es zwei nach links verschobene durch kleine "a" gekennzeichnete Abbildungen und symmetrisch dazu zwei nach rechts verschobene Abbildungen, die nicht eingezeichnet sind. Die Punktspiegelung versetzt bei der Abbildung nullter Ordnung das Licht der linken Lichtquellen (28) nach rechts und umgekehrt. Die Lichtquelle, die mit einem großen "A" gekennzeichnet ist, wird an die Stelle projiziert, wo sich das rechte kleine "a" befindet. An den Projektionsstellen der Abbildung nullter Ordnung befinden sich keine optischen Bauelemente, wobei diese Stellen bei Verwendung von Filmhologrammen absorbierend ausgeführt werden sollten, damit keine störenden Abbildungen von dort ausgehen können. Mit Hilfe eines binären oder multilevel Hologrammes kann die nullte Abbildung auch unterdrückt werden. Durch die Verschiebung befinden sich die Vektoren dann auf der gleichen Seite, von der sie abgestrahlt wurden, nur sind jetzt ihr Elemente verkehrt angeordnet. Die Verschiebung ist so groß, daß Abbildungen zweiter Ordnung nicht mehr auf die Schaltung fallen. In den Detektoren sammeln sich dann Zwischenergebnisse. Diese Zwischenergebnisse werden anschließend an die äußeren Lichtquellen (29) angelegt, die dann durch die Verschiebungen, die mit einem "b" gekennzeichnet sind, in den äußeren Detektorstreifen gesammelt werden. Wenn die Abbildung nullter Ordnung vorhanden ist, muß der linke und der rechte Teil dieser Operation nacheinander ausgeführt werden, damit sich die beiden Operationen nicht gegenseitig beeinflussen. Das Endergebnis entsteht dann durch elektronische Addition der beiden Zwischenergebnisse in den äußeren Detektorstreifen (30).

In Fig.20 ist ein ähnliches optisches Rechenwerk wie in Fig.12 dargestellt, das für neuronale Netze geeignet ist. Die Berechnung erfolgt in diesem Beispiel in einem Schritt mit jeweils drei Verschiebungen nach links, rechts, oben und unten. Diese Verschiebungen werden durch zwei Liniengitter erzeugt, die normal aufeinander stehen (Fig. 16) und die mit zueinander senkrechten Polarisatoren versehen sind. Die Matrixelemente sind punktgespiegelt zu den Vektoren angeordnet. Bei den einzelnen Zellen sind absorbierende Bereiche (31) für die Abbildung nullter Ordnung vorgesehen. An jeder Zelle ist ein elektronischer Multiplizierer, ein elektronischer Addierer und ein Speicher vorhanden. Der Multiplizierer dient zur Berechnung des äußeren Produktes und zur Multiplikation der Vektorelemente mit den Matrixelementen. Der Addierer addiert entsprechend einer Lernregel das Ergebnis des äußeren Produktes zu den Matrixelementen. Zur Bildung des äußeren Produktes werden die Vektoren an den beiden Lichtquellenstreifen (32) angelegt und ihre Elemente in den entsprechenden Detektoren punktgespiegelt und verschoben empfangen. Zur Bildung des Vektor-Matrix- oder des Vektor-Transponiertmatrix-Produktes wird der Vektor an einen der beiden Lichtquellenstreifen (32) angelegt und optisch zu den Zellen übertragen. Dort erfolgt die Multiplikation mit den Matrixelementen und das Ergebnis wird an den Matrixlichtquellen (33) angelegt. Durch optische Addition findet man das Ergebnis in dem Detektorstreifen (34), der dem anderen Lichtquellenstreifen zugeordnet ist. In diesem Beispiel wirken sich die Abbildungen höherer Ordnung nicht aus, weil sie entweder mit anderen Abbildungen erster Ordnung zusammenfallen oder nicht auf die Schaltung projiziert werden. Der Vorteil dieser Anordnung liegt darin, daß zum Beispiel die Lernregel eines Backpropagation-Algorithmus lokal angewendet werden kann, ohne daß die einzelnen Matrixelemente durch Leitungen von außen angesprochen werden müssen. Diese Anordnung kann auch digital ausgeführt werden, wobei dann jedes Element durch mehrere Lichtquellen repräsentiert wird und Vorzeichen durch getrennte Behandlung von positiven und negativen Zahlen berücksichtigt werden können.

In Fig.21 ist ein Vektormatrixmultiplizierer dargestellt, der dreistellige Binärzahlen verarbeiten kann und sowohl die Zwischenergebnisse der bitweisen Multiplikation in jedem Matrixelement, die in den Lichtquellen (35) wie in Fig.13 repräsentiert sind, als auch die Matrixelemente selbst aufaddieren kann. Diese Variante eignet sich besonders für schnellste Vektormatrixmultiplikationen. Wenn die Matrix bereits gespeichert ist, kann die Multiplikation in einem Schritt an jedem Ort durchgeführt werden. Die Addition erfolgt optisch und die Auswertung des Ergebnisses in den Detektoren (36) muß nur für jedes Ergebnisvektorelement durchgeführt werden. Auch hier kann man erreichen, daß Abbildungen höherer Ordnung sich nicht störend auswirken.

Bei allen vorangegangen Beispielen können Verzeichnungsfehler durch Verschieben der Detektoren und der modulierenden Bauelemente ausgeglichen werden. Der Platz, der dafür nötig ist, muß beim Entwurf des Chips berücksichtigt werden. Auch müssen die Detektoren ausreichend groß sein, damit das gesamte Beugungsscheibchen detektiert wird und es nicht zu Interferenzphänomenen kommen kann, die vor allem bei kohärentem Laserlicht und Addition von mehreren Abbildungen die Detektionsergebnisse verfälschen können. Auch können SEED (self electrooptic effect device) Bauelemente zum Einsatz kommen, deren Zustand optisch verändert und auch gespeichert werden kann. Der vorgestellte Chip kann sowohl analog als auch digital arbeiten, wobei nicht nur das binäre Zahlensystem verwendet werden muß.

## Patentansprüche

1. Optoelektronische integrierte Schaltung (1) mit einer Substratfläche, die ein Lichtmuster (2) erzeugt, wobei Lichtstrahlen von einigen ihrer optisch aktiven Bauelemente ausgehen, Lichtstrahlen durch einige ihrer optisch aktiven Bauelemente hindurchgehen und/oder Lichtstrahlen von einigen ihrer optisch aktiven Bauelemente reflektiert werden um so das Lichtmuster zu erzeugen, und mit einem reflektierenden Hologramm, wobei der Begriff "Hologramm" Lichtbeugungsstrukturen einschließt, wie beispielsweise reflektierende binäre oder multilevel Phasengitter, mehrschichtige Hologramme, dicke Hologramme oder Volumenhologramme, die auf sie einfallende Wellenfronten so durch lokale Änderung der Amplitude, der Phase, der Polarisation und/oder Kombination aus diesen beugen, daß Abbildungen von Lichtpunkten durch sie alleine, mit zusätzlichen Linsen und/oder zusätzlichen Spiegeln entstehen, wobei das von den Bauelementen erzeugte Lichtmuster oder Teile davon vom Hologramm (4) auf die Substratfläche zurückreflektiert wird, **dadurch gekennzeichnet, daß** dieses Lichtmuster oder Teile davon vom Hologramm in erster oder höheren Ordnungen gebeugt werden, wobei das Lichtmuster durch das Hologramm oder durch eine zusätzliche Linse (5) punktgespiegelt mit durch das Hologramm bestimmten Intensitäten mehrfach auf die Substratfläche abgebildet werden (3), und daß die zurückreflektierten, punktgespiegelten Lichtmuster teilweise oder ganz auf optisch aktive Bauelemente, wie beispielsweise Lichtdetektoren und/oder Lichtmodulatoren, fallen, um so eine logische Verknüpfung von Lichtintensitäten, die von einem oder mehren Punkten des Musters ausgehen, durchführen zu können.

2. Optoelektronische integrierte Schaltung nach Anspruch 1 **dadurch gekennzeichnet, daß** zusätzliche unerwünschte durch das oder die Hologramme erzeugte Abbildungen außerhalb der Schaltung, mit erwünschten Abbildungen gemeinsam und/oder auf Stellen, wo keine optischen Bauelemente vorhanden sind, abgebildet werden, damit keine störenden optischen Verbindungen entstehen, wobei optional Blenden und lichtabsorbierende Oberflächen weitere Strahlengänge verhindern.

3. Optoelektronische integrierte Schaltung nach Anspruch 1 oder 2 **dadurch gekennzeichnet, daß** mehrere Hologramme mit Modulatoren, Polarisatoren, Filtern, Linsen und/oder Spiegeln nebeneinander und/oder hintereinander angeordnet werden, damit optische Verbindungen entstehen, die sich nicht gegenseitig beeinflussen.

4. Optoelektronische integrierte Schaltung nach Anspruch 1, 2 oder 3 **dadurch gekennzeichnet, daß** die lokale Änderung der Wellenfronten durch das oder die Hologramme variabel ist, zum Beispiel durch elektrooptische Kristalle oder Flüssigkristalle, und/oder von der Wellenlänge abhängig ist, damit optische Verbindungen entstehen, die änderbar sind.

5. Optoelektronische integrierte Schaltung nach Anspruch 1, 2, 3 oder 4 **dadurch gekennzeichnet, daß** sich auf der Vorder- und/oder Rückseite des Substrates (1), das vorzugsweise ein Halbleitereinkristall ist, optisch aktive Bauelemente, wie Laserdioden, Leuchtdioden, multiple quantum well Bauelemente und/oder integrierte elektrooptische Modulatoren, befinden, die Licht zu einer oder beiden Seiten des Substrats abstrahlen, bzw. das einfallende Licht, das vorzugsweise durch Hologramme (4,6) und/oder Linsen (5,7) fokusiertes Laserlicht ist, durch Ändern der Transmissions- und/oder Reflexionseigenschaften modulieren, und daß sich weiters an bestimmten Stellen auf dem Substrat Detektoren, wie zum Beispiel Photodioden, befinden, die das einfallende Licht empfangen, wobei das Licht gegebenenfalls mehrmals durch Bauelemente moduliert wird und dabei mehrmals durch gegebenenfalls vorhandene Hologramme reflektiert wird.

6. Optoelektronische integrierte Schaltung nach Anspruch 5 **dadurch gekennzeichnet, daß** sich die abbildenden Hologramme (4,6), bzw. die optischen Linsen (5,7) auf der Substratoberfläche und/oder im Substrat (1) befinden, daß sich die abbildenden Hologramme (4,6), bzw. die optischen Linsen (5,7) auf und/oder in lichtdurchlässigen Schichten befinden, die auf der Vorder- und/oder auf der Rückseite des Substrats angebracht sind und/oder daß Blenden, die beispielsweise durch Ätzprozesse im Substrat und/oder auf den am Substrat befestigten Schichten erzeugt werden, vorhanden sind.

7. Optoelektronische integrierte Schaltung nach Anspruch 5 oder 6 **dadurch gekennzeichnet, daß** mehrere solche optoelektronische Schaltungen in Sandwichbauweise verbunden werden, und daß wahlweise Hologramme, optische Linsen, Linsensysteme oder Beugungslinsen Licht von einer Schaltungsebene zur anderen projizieren.

8. Optoelektronische integrierte Schaltung nach einem der Ansprüche 1 bis 7 **dadurch gekennzeichnet, daß** sich SEED-(self electrooptic effect device)-Bauelemente auf dem Substrat befinden, die durch einfallendes Licht ihren Zustand ändern.

9. Optoelektronische integrierte Schaltung nach einem der Ansprüche 1 bis 8, **dadurch gekennzeichnet, daß** eine regelmäßige Lichtverteilung wiederholt auf die Schaltung zurückreflektiert wird, sodaß in der Nähe jedes Lichtpunktes jeder andere Lichtpunkt abgebildet wird.

10. Optoelektronische integrierte Schaltung nach einem der Ansprüche 1 bis 9, **dadurch gekennzeichnet, daß** matrix-, zeilen- und/oder spaltenförmige Lichtverteilungen wiederholt in ein Bauelement oder in matrix-, zeilen- und/oder spaltenförmige Bauelementgruppen, wie beispielsweise Lichtdetektoren, zurückreflektiert werden.

11. Optoelektronische integrierte Schaltung nach einem der Ansprüche 1 bis 10, **dadurch gekennzeichnet, daß** die von einem optisch aktiven Bauelement ausgehenden Lichtstrahlen von diesem in einem Lichtkegel mit großem Winkel ausgehen.

## Claims

1. Opto-electronic integrated circuit (1) with a substrate surface, which creates a light pattern (2) whereby light rays emanate from some of its optically active components, light rays penetrate through some of its optically active components and/or light rays are reflected by some of its optically active components, thereby to create the light pattern, and with a reflecting hologram, whereby the term "hologram" includes light diffracting structures, such as for example, reflecting binary or multilevel phase gratings, multilayered holograms, thick holograms or volume holograms which diffract wave fronts impinging on them by a localized change of amplitude, of the phase, of the polarization and/or a combination thereof such that images of light points are generated by them alone, with additional lenses and/or with additional mirrors, whereby the light pattern or parts thereof created by the components are reflected back to the surface of the substrate by the hologram (4), **characterized by the fact that** this light pattern or parts thereof are diffracted by the hologram into first or higher orders, whereby the light pattern is repeatedly imaged (3) on the surface of the substrate in a point reflecting manner by the hologram or by an additional lens (5) with intensities defined by the hologram, and that the reflected back and point reflected light patterns impinge partially or completely on optically active components such as, for instance, light detectors and/or light modulators, thereby to execute a logic connection of light intensities emanating from one or more points of the pattern.

2. Opto-electronic integrated circuit according to claim 1, **characterized by the fact that** additional undesired images generated by the hologram or the holograms are imaged outside of the circuit together with desired images and/or at sites where there are no optical components, so that no interfering optical connections occur, whereby optional stops and light absorbing surfaces prevent further ray paths.

3. Opto-electronic integrated circuit according to claim 1 or 2, **characterized by the fact that** a plurality of holograms with modulators, polarizers, filters, lenses and/or mirrors are arranged side-by-side and/or in succession so that optical connections are generated which do not interfere with each other.

4. Opto-electronic integrated circuit according to claim 1, 2 or 3, **characterized by the fact that** the localized change of the wavefront may be varied by the hologram or the holograms, for instance by electro-optic crystals or liquid crystals, and/or is dependent upon the wave length, so that optical connections may be generated which are variable.

5. Opto-electronic integrated circuit according to claim 4, **characterized by the fact that** there are provided at the front and/or rear surfaces of the substrate which preferably is a semi-conductor crystal, there are provided optically active components such as laser diodes, light emitting diodes, multiple quantum well components and/or integrated electro-optic modulators which radiate light to one or both sides of the substrate, the light being preferably laser light focused by holograms (4,6) or lenses (5,7), or which modulate the impinging light by changing their transmission and/or reflection properties, and that, furthermore, there are provided at certain areas of the substrate detectors, such as, for instance, photodiodes which receive the impinging light, whereby the light, if necessary, is modulated several times by components and thus is repeatedly reflected by holograms which may be present.

6. Opto-electronic integrated circuit according to claim 5, **characterized by the fact that** the image forming holograms (4,6) or optical lenses (5,7) are provided on the surface of the substrate and/or in the substrate (1), that the image forming holograms (4,6) or the optical lenses (5,7) are provided on and/or in light pervious layers attached to the front and rear surfaces of the substrate, and/or that there are provided stops, manufactured, for instance, by etching processes in the substrate and/or in the layers attached to the substrate.

7. Opto-electronic integrated circuit according to claim 5 or 6 **characterized by the fact that** a plurality of such opto-electrical circuits are connected in a sandwich structure, and that, selectively, holograms, optical lenses, lens systems or diffraction lenses are projecting light from one circuit plane to another.

8. Opto-electronic integrated circuit according to claim 1 to 7, **characterized by the fact that** SEED components (self electro-optic effect device) which change their state by impinging light are provided on the substrate.

9. Opto-electronic integrated circuit according to claim 1 to 8, **characterized by the fact that** a regular light distribution is repeatedly reflected back to the circuit so that each other light point is projected adjacent to each light point.

10. Opto-electronic integrated circuit according to claim 1 to 9, **characterized by the fact that** matrix, linear and/or columnar light distributions are repeatedly reflected back into a component or into matrix, linear or columnar groups of components, such as, for instance, light detectors.

11. Opto-electronic integrated circuit according to claim 1 to 10, characterized by the fact that the light rays emanating from an optically active component emanate therefrom in a large angle light cone.

## Revendications

1. Circuit optoélectronique intégré (1) avec une face de substrat qui produit une figure lumineuse (2), les rayons lumineux partant de certains de ces modules actifs optiquement, les rayons lumineux traversant certains de ces modules actifs optiquement et/ou des rayons lumineux de certains de ces modules actifs optiquement étant réfléchis pour ainsi générer la figure lumineuse, et avec un hologramme réfléchissant, le terme "hologramme" incluant des structures de diffraction lumineuses, comme par exemple des réseaux de phase réfléchissants binaires ou multi-niveaux, des hologrammes multicouche, des hologrammes épais ou des hologrammes de volume, les fronts d'onde incidents en diffraction par modification locale de l'amplitude de la phase de la polarisation et/ou de leur combinaison de sorte que sont produites des représentations de points lumineux par eux seuls, avec des objectifs supplémentaires et/ou des miroirs supplémentaires, la figure lumineuse générée par les modules ou parties de celle-ci sont réfléchies à nouveau par l'hologramme (4) sur la face du substrat, caractérisé en ce que cette figure lumineuse ou parties de celle-ci sont diffractées par l'hologramme dans un premier ordre ou dans des ordres supérieurs, la figure lumineuse étant réfléchie par points par l'hologramme ou par un objectif supplémentaire (5) avec des intensités déterminées par l'hologramme reproduit plusieurs fois sur la face de substrat (3) et en ce que les figures lumineuses réfléchies, renvoyées par points viennent partiellement ou totalement en incidence sur les modules actifs optiquement, comme par exemple les détecteurs lumineux et/ou les modulateurs lumineux, afin de pouvoir réaliser une liaison logique des intensités lumineuses qui proviennent d'un ou de plusieurs points de la figure.

2. Circuit optoélectronique intégré selon la revendication 1, caractérisé en ce que des représentations supplémentaires indésirables générées par le ou les hologrammes à l'extérieur du circuit, sont représentées conjointement avec les représentations souhaitées et/ou sur des positions où n'existe aucun module optique, afin de ne pas générer de liaison optique perturbatrice, des écrans et des surfaces absorbant la lumière pouvant facultativement empêcher d'autres marches de rayons.

3. Circuit optoélectronique intégré selon la revendication 1 ou 2, caractérisé en ce que plusieurs hologrammes sont disposés avec des modulateurs, polarisateurs, filtres, objectifs et/ou réflecteurs côte à côte et/ou l'un derrière l'autre afin de produire des liaisons optiques qui n'exercent pas d'influence réciproque l'une sur l'autre.

4. Circuit optoélectronique intégré selon la revendication 1, 2 ou 3, caractérisé en ce que la modification locale des fronts d'ondes est variable par le ou les hologramme(s), par exemple par des cristaux électrooptiques ou des cristaux liquides et/ou dépend de la longueur d'onde afin de créer des liaisons optiques qui sont modifiables.

5. Circuit optoélectronique intégré selon la revendication 1, 2 ou 3 ou 4, caractérisé en ce que sur le côté avant et/ou arrière du substrat (1) qui est de préférence un monocristal semi-conducteur, se trouvent des modules actifs optiquement, tels que des diodes lasers, des diodes lumineuses, des modules à puits quantiques multiples et/ou des modulateurs électrooptiques intégrés, qui réfléchissent la lumière sur un ou sur les deux côtés du substrat, ou modulent la lumière incidente, qui de préférence est la lumière laser focalisée par les hologrammes (4, 6) et/ou les objectifs (5, 7), par modification des propriétés de transmission et/ou de réflexion, et en ce que de plus, en certains endroits du substrat, sont disposés des détecteurs comme par exemple des photodiodes qui reçoivent la lumière incidente, la lumière étant éventuellement modulée plusieurs fois par des modules et étant réfléchie plusieurs fois par des hologrammes éventuellement présents.

6. Circuit optoélectronique intégré selon la revendication 5, caractérisé en ce que les hologrammes représentés (4, 6) ou les lentilles optiques (5, 7) sont disposés sur la surface de substrat et/ou dans le substrat (1), en ce que les hologrammes représentatifs (4, 6) ou les lentilles optiques (5, 7) se trouvent sur et/ou dans les couches transparentes à la lumière qui sont disposées sur le côté avant et/ou sur le côté arrière du substrat et/ou en ce que des écrans qui par exemple sont produits par des procédés lithographiques dans le substrat et/ou sur les couches fixées du substrat, ont été prévus.

7. Circuit optoélectronique intégré selon la revendication 5 ou 6, caractérisé en ce que plusieurs circuits optoélectroniques de ce type sont reliés en construction en "sandwich" et en ce que facultativement, les hologrammes, lentilles optiques, systèmes de lentilles ou lentilles de diffraction, projettent la lumière d'un plan de circuit à un autre.

8. Circuit optoélectronique intégré selon l'une des revendications 1 à 7, caractérisé en ce que des modules SEED (self electrooptic effect device) sont disposés sur le substrat qui modifient son état par la lumière incidente.

9. Circuit optoélectronique intégré selon l'une des revendications 1 à 8, caractérisé en ce qu'une répartition de lumière régulière est réfléchie de façon répétée sur le circuit de sorte qu'à proximité de chaque point de lumière, est représenté chaque autre point de lumière.

10. Circuit optoélectronique intégré selon l'une des revendications 1 à 9, caractérisé en ce que des répartitions de lumière en forme de matrices, de lignes et/ou de colonnes sont réfléchies de façon répétée dans un module ou dans des groupes de modules en forme de matrices, de lignes et/ou de colonnes, comme par exemple les détecteurs lumineux.

11. Circuit optoélectronique intégré selon l'une des revendications 1 à 10, caractérisé en ce que les rayons lumineux partant d'un module actif optiquement partent de celui-ci sous forme de cône lumineux à grand angle.
